Europäisches Patentamt

European Patent Office

Office européen des brevets

(19)

(11) EP 0 749 014 A1

(12) # DEMANDE DE BREVET EUROPEEN

(43) Date de publication:
18.12.1996 Bulletin 1996/51

(51) Int Cl.6: **G01P 5/00**

(21) Numéro de dépôt: 96401286.8

(22) Date de dépôt: 13.06.1996

(84) Etats contractants désignés:
**BE DE DK ES GB IT NL PT**

(30) Priorité: **14.06.1995 FR 9507080**

(71) Demandeur: **COMMISSARIAT A L'ENERGIE ATOMIQUE**
**75015 Paris (FR)**

(72) Inventeurs:
• **Derou, Dominique**
  **50290 Breville-sur-Mer (FR)**

• **Dinten, Jean-Marc**
  **69008 Lyon (FR)**
• **Herault, Laurent**
  **38640 Claix (FR)**
• **Niez, Jean-Jacques**
  **33170 Gradignan (FR)**

(74) Mandataire: **Dubois-Chabert, Guy et al**
**c/o BREVATOME**
**25, rue de Ponthieu**
**75008 Paris (FR)**

(54) **Procédé de reconstruction d'un champ dense de caractéristiques associées à un phénomène physique**

(57) La présente invention concerne un procédé de reconstruction d'un champ de caractéristiques associées à un phénomène physique à partir de mesures éparses comportant les étapes suivantes :

- élaboration d'un modèle de reconstruction du champ élaboré à partir de connaissances a priori sur le phénomène étudié de façon à obtenir une fonction analytique ;

- réalisation d'un maillage du champ ;

- reconstruction du champ par optimisation de la fonction analytique ;

et dans lequel le modèle de reconstruction prend en compte les caractéristiques physiques du phénomène.

DONNEES EPARSES FOURNIES PAR LE PROCEDE DE TRAJECTOGRAPHIE D'OBJETS

10 MISE AU POINT D'UN MODELE DE REGULARISATION

11 MAILLAGE AUTO-ADAPTATIF, ADAPTE A LA REPARTITION SPATIALE DES MESURES

12 RESOLUTION DU PROBLEME D'OPTIMISATION

FIG. 1

EP 0 749 014 A1

**Description**

Domaine technique

Le domaine technique auquel se rattache l'invention est celui de la reconstruction d'un champ dense de primitives, ou caractéristiques de trajectoires d'objet, comme la vitesse ou l'accélération par exemple, à partir de mesures éparses. Plus particulièrement, l'invention concerne un procédé appliqué au domaine de la vélocimétrie par imagerie de particules en mécaniques des fluides.

Etat de la technique antérieure

Induire et reconstruire un champ de primitives équiparties à partir de la connaissance de données très éparses est un problème commun à de nombreuses applications de domaines variés. Il concerne autant la construction de cartes topographiques à partir de données issues de relevés terrains, que la reconstruction d'un champ de vitesses dense à partir des résultats fournis par l'équation de contrainte du mouvement en estimation de mouvement ou encore la reconstruction de la surface visible d'objets à partir de mesures stéréoscopiques.

En mécanique des fluides, il est important de disposer de la connaissance du champ de vitesse en tout point du domaine étudié.

**Trajectographie d'objets**

Un article de C. Peterson (référence [1]) présente un algorithme neuromimétique pour trouver les trajectoires de particules dans des expériences de physique des particules. L'algorithme est basé sur un réseau de neurones du type de celui de Hopfield et sur des équations de mise à jour des neurones issues de la théorie du champ moyen. Le problème de suivi de particules est formalisé comme la recherche de trajectoires (objets) composées du plus grand nombre de points (fragments) formant des courbes lisses et droites. Un neurone du réseau étant associé à chaque couple de fragments, le problème revient à rechercher des courbes formées de couples de fragments contigus, de même sens et le plus alignés possible. Une énergie E, fonction pondérée des termes associés à ces critères codant la qualité de la solution, permet d'obtenir les équations d'évolution des coefficients synaptiques du réseau neuronal. A la convergence du réseau, l'énergie E est optimisée. On peut noter les défauts suivants :

- une grande sensibilité aux paramètres. Le résultat final est très dépendant des paramètres pondérant les différents termes de l'équation de l'énergie ;
- non satisfaction des contraintes. Le réseau optimisant une fonction, qui code globalement le problème, on ne peut pas assurer que toutes les contraintes seront rigoureusement satisfaites. En d'autre termes, la solution peut contenir des éléments ne satisfaisant pas les contraintes. La solution finale peut donc être de mauvaise qualité ;
- temps de calcul prohibitif. L'algorithme de calcul ne réalise aucun prétraitement. Si l'image contient n attributs, le réseau sera composé de $n^2$ neurones, soit $n^4$ poids synaptiques à déterminer. Les temps de calcul requis sont donc très importants. C'est d'ailleurs la raison pour laquelle cet algorithme n'a été implanté que sur des problèmes de très petite dimension.

Un article de A. Cenedese, G. Romano, A. Paglialunga et M. Terlizzi (référence [2]) présente une méthode neuromimétique de reconnaissance de trajectoires en mécanique des fluides. Le réseau utilisé est un réseau multicouches basé sur un modèle fourni par le classifieur de Carpenter-Grossberg. Dans ce type de réseau, le calcul des poids synaptiques s'effectue sans superviseur. L'algorithme fonctionne avec une séquence d'images. L'apprentissage, et donc le calcul des poids synaptiques, est réalisé grâce à un certain nombre d'images de la séquence. Ensuite le champ de vitesse pourra être déterminé. Le réseau neuromimétique décrit dans cet article est un réseau à apprentissage. L'inconvénient majeur de cette méthode est donc que, pendant le temps d'enregistrement de la séquence, le régime du fluide en mouvement analysé doit être stationnaire. D'autre part, la méthode nécessite un temps de calcul très important et utilise de nombreux paramètres dont l'estimation est ad hoc. Enfin, en l'état actuel, l'algorithme proposé nécessite une importante validation.

Un article de M. Gyulassy et de M. Harlander (référence [3]) propose un algorithme de suivi élastique pour déterminer des trajectoires d'expériences de physique des particules. Dans l'approche de suivi élastique, une trajectoire est un objet hélicoïdal, qui se trouve dans une forme s'ajustant le mieux aux données, i.e. aux fragments. L'hélice peut être vue comme étant chargée électriquement et étant attirée par les fragments qui ont une charge de signe opposé. La notion de suivi élastique intervient dans le calcul des poids synaptiques. Le réseau de neurones utilisé est le même réseau que celui utilisé par C. Peterson dans l'article précédemment cité. Seul le calcul des poids synaptiques est modifié, chaque poids synaptique tenant alors compte de la qualité de la trajectoire ajustable sur les neurones reliés par ce poids synaptique. Cette méthode présente les mêmes inconvénients que la méthode de C. Peterson :

-   sensibilité aux paramètres,
-   non satisfaction des contraintes,
-   temps de calcul prohibitif.

La trajectographie d'objets concerne l'étude des trajectoires temporelles et spatiales d'objets en mouvement, par exemple des particules en mouvement. Elle identifie et reconstitue les trajectoires des objets et fournit les caractéristiques de ces trajectoires (par exemple vitesse, accélération). Comme les objets se déplacent dans un certain domaine d'étude et comme un procédé de trajectographie d'objets ne fournit les caractéristiques des trajectoires que de ces objets, les caractéristiques des trajectoires ne sont connues qu'en quelques positions du domaine étudié. Ces caractéristiques de trajectoires, que l'on appelle mesures ou données, sont donc éparses. Le résultat du procédé de trajectographie d'objets va constituer l'entrée du procédé de reconstruction d'un champ dense de primitives, i.e. caractéristiques de trajectoires d'objets.

La reconstruction d'un champ dense de caractéristiques de trajectoires d'objets concerne la reconstruction d'un champ dense où les caractéristiques des trajectoires d'objets sont connues en tout point du domaine étudié à partir des mesures éparses fournies par le procédé de trajectographie d'objets.

Les caractéristiques des trajectoires d'objets fournies par le procédé de trajectographie d'objets doivent être combinées et diffusées pour obtenir la valeur des caractéristiques de trajectoires en tout point du domaine étudié. Ce problème s'appelle la reconstruction d'un champ dense de primitives. Il ne s'agit pas d'un problème d'interpolation de données, mais d'un problème d'approximation. En effet, les mesures ne peuvent être considérées comme absolument fiables. Des erreurs au cours du traitement préalable ont pu apparaître. Du bruit peut par ailleurs altérer les résultats. Il ne faut donc pas vouloir interpoler les mesures connues exactement: contraindre les données à conserver leurs valeurs conduirait inévitablement à un résultat erroné. La condition d'interpolation doit être relaxée, ce qui transforme le problème en un problème d'approximation.

## Méthodes de reconstruction utilisées en mécanique des fluides

Des méthodes ayant pour objet la reconstruction d'un champ dense de caractéristiques de trajectoires sont décrites dans différents articles de l'art connu en mécanique des fluides, et notamment dans ceux cités ci-après.

Une méthode couramment utilisée (référence [4]) utilise la méthode d'interpolation de données développée par P. Hardy (référence [5]) pour des applications en topographie géophysique. L'hypothèse faite est que le champ de vitesse à reconstruire peut être assimilé à une surface multiquadrique :

$$
\begin{cases}
V_i = (u_i, v_i) \ \text{au point} \ (x_i, y_i) \\
u_i(x_i, y_i) = \sum_{j=1}^{N} aj\sqrt{1 + (x_i - x_j)^2 + (y_i - y_j)^2} \\
v_i(x_i, y_i) = \sum_{j=1}^{N} b_j\sqrt{1 + (x_i - x_j)^2 + (y_i - y_j)^2}
\end{cases}
\quad (1)
$$

où $V_i$ est le vecteur vitesse au point $(x_i, y_i)$, $u_i$ et $v_i$ sont les composantes du vecteur $V_i$, $N$ est le nombre de vecteurs vitesse connus et $a_j$ et $b_j$ sont des constantes à déterminer. En appliquant ces relations sur chaque vecteur vitesse connu, on obtient $2N$ équations à $2N$ inconnues (coefficients $a_j$ et $b_j$). Les constantes inconnues $a_j$ et $b_j$ sont déterminées en résolvant le système d'équations linéaires trouvé. Les constantes ainsi calculées sont alors utilisées conjointement avec les valeurs $x_j$ et $y_j$ associées, pour reconstruire le champ de vitesse en tout point $(x_i, y_i)$ de l'écoulement, grâce aux équations (1). L'inconvénient majeur de cette méthode réside dans le choix arbitraire de relations multiquadriques : aucune étude n'a été réalisée permettant de justifier théoriquement ou expérimentalement le choix de telles relations dans le cadre d'écoulements de mécanique des fluides.

Aguï et Jimenez (référence [6]), après avoir comparé diverses méthodes d'interpolation incluant l'interpolation polynomiale, les moindres carrés polynomiaux et les convolutions, ont proposé une méthode de convolution simple avec une fenêtre Gausienne adaptative. La vitesse au point $(x_i, y_i)$ est ainsi définie par:

$$u_i\left(resp.\, v_i\right) = \frac{\sum_{j=1}^{N} \alpha_j . u_j \left(resp.\, v_j\right)}{\sum_{j=1}^{N} \alpha_j}$$

Les coefficients $\alpha_j$ sont des coefficients d'interpolation définis par:

$$\alpha_j = \exp\left[\frac{-\left(\left(x_j - x_i\right)^2 + \left(y_j - y_i\right)^2\right)}{H^2}\right]$$

La largeur de fenêtre optimale $H$ proposée par Aguï et Jimenez est $H = 1,24.\delta$, où $\delta$ est la distance moyenne entre particules calculées par $\delta = (1/\pi n)^{\frac{1}{2}}$ avec $n$ nombre moyen de particules par unité de surface. Comme dans le cas de la précédente méthode, rien ne prouve qu'interpoler par convolutions a une quelconque signification physique par rapport aux propriétés de l'écoulement de mécanique des fluides. En conséquence, s'il est vrai que le champ de vitesse reconstruit présentera un aspect qualitativement "esthétique", grâce au lissage sous-jacent, il n'en demeure pas moins qu'il n'aura aucun sens physique réel et qu'il sera quantitativement inexploitable.

Une interpolation linéaire par méthode des moindres carrés a été proposée par K. Iwaichi et K. Ohmi (référence [7]). En supposant qu'il existe deux équations linéaires entre les vitesses inconnues $V_i(u_i, v_i)$ et les vitesses connues $V_j(u_j, v_j)$ où $j \in <1,N>$ :

$$\begin{cases} u_j = u_i + \dfrac{\partial u_i}{\partial x}\left(x_i - x_j\right) + \dfrac{\partial u_i}{\partial y}\left(y_i - y_j\right) \\[2mm] v_j = v_i + \dfrac{\partial v_i}{\partial x}\left(x_i - x_j\right) + \dfrac{\partial v_i}{\partial_y}\left(y_i - y_j\right) \end{cases} \qquad \textbf{(2)}$$

Les variables inconnues ($u_i, v_i$ et leurs dérivées) sont évaluées en tout point ($x_i, y_i$) à partir des observations connues ($u_j, v_j, x_j, y_j$) de telle sorte que la différence reliant les deux termes des égalités **(2)** soit minimisée. Une même cause ayant une même conséquence, cette interpolation étant linéaire, elle fait abstraction de toutes les propriétés physiques des écoulements.

Enfin, Hino et al. (référence [8]) ont exposé une méthode pour estimer le champ de vitesse instantané à partir de quelques points mesurés. Dans une première étape, la méthode permet d'interpoler les données connues en considérant que le champ de vitesses à reconstruire est la déformation d'une hypothétique plaque mince élastique par quelques charges virtuelles concentrées en des points arbitraires (la déformation de la plaque correspond aux composantes de la vitesse $u$ et $v$). L'utilisation de plaques minces ou membranes est largement répandue en régularisation. La méthode Hino et al. a cependant la particularité d'utiliser le formalisme de la fonction de Green associée à la déformation de la plaque mince pour résoudre le problème. Dans une seconde étape, afin d'améliorer l'estimation grossière fournie par la première étape, la fonctionnelle suivante est minimisée :

$$F = \int_{\Omega}\left[\left(\left(u - u_0\right) + \left(v - v_0\right)\right) + \lambda .\left(\frac{\partial u}{\partial x} + \frac{\partial v}{\partial y}\right)\right]$$

où $\Omega$ est le domaine de l'écoulement, $u_0$ et $v_0$ sont les estimations de $u$ et $v$ fournies par la première étape et $\lambda$ est le multiplicateur de Lagrange. Le premier terme a pour objet de s'approcher de l'estimation grossière déjà calculée, tandis que le second introduit l'équation de continuité de mécanique des fluides *(div(V)=0)*. Par rapport aux autres méthodes, cette méthode réalise une approximation et non une interpolation et s'affranchit donc ainsi du problème lié au bruit ou aux erreurs. D'autre part, elle introduit une propriété de mécanique des fluides.

Malgré des avancées marquantes, les méthodes d'approximation de données sont encore loin de fournir des résultats satisfaisants, notamment en ce qui concerne les applications en reconstruction de champ de vitesse dense.

Si l'on cherche à faire le point sur les carences des méthodes traditionnelles, on peut se rendre compte que :

- les méthodes utilisées, principalement en mécanique des fluides, ne prennent que rarement voire jamais en compte des considérations sur le phénomène physique sous-jacent ;
- la plupart du temps, l'a priori introduit est basé sur des termes de lissage ;
- l'évaluation de la qualité d'une reconstruction est bien difficile à réaliser;
- la détermination des paramètres reste une question ouverte ;
- les temps de calcul requis par ces méthodes sont en général très importants ;
- aucune de ces méthodes ne prend en compte la répartition spatiale des mesures.

Ces procédés de l'art antérieur ne permettent pas d'obtenir de reconstruction de champ dense de caractéristiques de trajectoires d'objets ayant un réel sens physique.

L'invention a pour objet une nouvelle formalisation qui prend en compte les propriétés physiques d'un phénomène aboutissant à un problème dit d'optimisation, et résolution du problème sur un maillage de champ optimisé et tenant compte de la répartition spatiale des objets.

Exposé de l'invention

La présente invention propose un procédé de reconstruction d'un champ dense de caractéristiques (par exemple de trajectoires d'objets, comme la vitesse ou l'accélération) associées à un phénomène physique à partir de mesures éparses, caractérisé en ce qu'il comporte les étapes suivantes :

- élaboration d'un modèle de reconstruction du champ élaboré à partir des connaissances a priori sur le phénomène étudié de façon à obtenir une fonction analytique (appelée énergie à optimiser) ;
- réalisation d'un maillage du champ ;
- reconstruction du champ par optimisation de la fonction analytique ;

et en ce que le modèle de reconstruction prend en compte les caractéristiques physiques du phénomène.

L'étape d'élaboration d'un modèle de régularisation formalise les spécificités du problème de reconstruction. Ce modèle est élaboré à parti de connaissances a priori sur le phénomène étudié. Il conduit à la définition d'une fonction analytique, appelée énergie, à optimiser.

Dans l'étape de maillage, le maillage est un maillage auto-adaptatif du domaine étudié, adapté à la répartition spatiale des mesures fournies par un procédé de trajectographie et réparties non-uniformément dans le domaine étudié. Cette étape fournit une grille composée de noeuds et de mailles.

Dans cette seconde étape on utilise un algorithme de type Kohonen dans lequel, afin d'assurer une bonne qualité de régularisation sur le maillage, les mailles de celui-ci dont aussi régulières que possible, et en ce que des contraintes sont imposées sur les angles entre ressorts d'une maille : les quatre angles formés par les ressorts pris deux par deux devant être supérieurs à un angle minimal.

De plus, on impose une distance minimale inter-noeuds.

Dans une réalisation avantageuse les caractéristiques sont les caractéristiques de trajectoire d'objet telles que la vitesse ou l'accélération. Les mesures éparses sont fournies par un procédé de trajectographie d'objets.

Le procédé de trajectographie d'objet comprend les étapes suivantes :

- une étape d'enregistrement de signaux composés de fragments caractéristiques des positions des objets à différents instants, de parties qui présentent la même nature que les fragments mais qui sont du bruit et de parties attribuables au bruit sans confusion possible ;
- une étape d'extraction de parties de signaux ayant la même nature que les fragments et détermination de caractéristiques et leur étant associées, à partir des connaissances a priori sur leur nature et sur les trajectoires recherchées ;
- une étape de répartition de l'ensemble des parties de signaux précédemment extraits en classes, chaque classe représentant une trajectoire potentielle et comprenant un nombre prédéterminé de fragments ;
- une étape de sélection d'un sous-ensemble de classes qui satisfait des contraintes liées au type de réseau observé, comportant :

- la génération d'un ensemble de n-uplets constitués d'un sous-ensemble de n classes,
- la mesure de compatibilité des classes assemblées en n-uplets par une première fonction analytique, déterminée à partir des contraintes liées au type de phénomène observé et au dispositif d'acquisition,
- la mesure de la qualité des n-uplets par une second fonction analytique, déterminée à partir des contraintes liées au phénomène observé et au dispositif d'acquisition ;

- une étape de sélection parmi les classes représentant les trajectoires potentielles de celles satisfaisant les contraintes, par un procédé d'optimisation sous contrainte du (ou des) critère(s) précédent(s), en utilisant les mesures précédentes de compatibilité et de qualité, de façon à obtenir les trajectoires "réelles" des objets.

Le procédé de l'invention est applicable dans le domaine de la vélocimétrie par imagerie de particules en mécanique des fluides.

La fonction analytique peut alors être telle que :

$$E(f) = \sum_{s \in (S \cap D)} \left\| f_s^d - f_s \right\|^2$$
$$+ \sum_{\{s,t\} \in C} \mu . \rho(d_{st}) . \left( \lambda \bot . \left( t_{st} . (f_s - f_t) \right)^2 + \lambda \backslash\backslash . \left( n_{st} . (f_s - f_t) \right)^2 \right) \qquad (3)$$
$$+ \sum_{\{s,t\} \in C} \lambda \nabla . \rho(d_{st}) . (\nabla . f)^2$$

où :

- $f_s^d$ et $f_t^d$ désignent respectivement les mesures de vitesse aux sites $s$ et $t$ du champ,
- $f_s$ et $f_t$ désignent respectivement les primitives (valeurs de vitesse) à reconstruire aux sites $s$ et $t$ du champ,
- $\mu$ est la viscosité dynamique du fluide considéré,
- $\lambda\bot$, $\lambda\backslash\backslash$, $\lambda\nabla$ et $\rho(d_{st})$ sont des paramètres,
- $D$ est l'ensemble des mesures,
- $S$ est l'ensemble des sites du champ,
- $n_{st}$ est le vecteur unitaire dirigé de $s$ vers $t$, $t_{st}$ est un vecteur unitaire normal à $n_{st}$ et $d_{st}$ est la distance séparant les sites $s$ et $t$,
- $\nabla . f$ est la divergence de la fonction $f$.

Une fois la fonction analytique $E(f)$ définie, la solution $f$ du problème est obtenue lorsque $E(f)$ est optimisée, i.e.:

$$\hat{f} = \text{argument optimum de } _{f \in F} E(f)$$

où $F$ est l'ensemble des solutions possibles.

L'invention propose un procédé plus robuste car il prend en compte :

- la nature du phénomène étudié ;
- la répartition spatiale des mesures utilisées comme entrée du procédé.

Par la formalisation du problème sous forme d'un problème de régularisation, par l'élaboration d'un modèle défini à partir de connaissances a priori sur le phénomène étudié et par l'emploi d'un maillage adapté à la répartition spatiale des mesures, on peut garantir une bonne qualité de la solution obtenue, qualité jusqu'à présent non atteinte par les autres méthodes de l'art connu.

Par rapport à l'art connu, le procédé de l'invention réunit les avantages suivants :

- il utilise les propriétés et caractéristiques du phénomène étudié. La solution est donc dirigée de façon juste. La solution possède une réelle signification au sens de la physique du phénomène ;
- le maillage auto-adaptatif s'ajustant à la répartition spatiale des données permet de stabiliser numériquement le problème (en termes mathématiques, on parle d'améliorer le conditionnement numérique du système lié au problème) ;
- le maillage auto-adaptatif permet d'accélérer considérablement les temps de calcul.

Le procédé de l'invention est particulièrement applicable dans le domaine de vélocimétrie, par exemple en mécanique des fluides. Dans cette application particulière les modèles de l'art antérieur ne prennent pas en compte la physique du phénomène à cause de la complexité des calculs. L'homme de l'art de la vélocimétrie n'est pas assez mathématicien pour connaître suffisamment d'outils permettant de mieux coller à la réalité des choses. Jusqu'à présent ce type de résultats lui suffisait. Cela n'est plus le cas actuellement, d'où l'intérêt de l'invention.

Le maillage adaptatif est utilisé dans les problèmes d'analyse de données. L'utilisation d'un maillage adapté n'est pas appliqué dans le domaine de la vélocimétrie parce que les gens n'avaient pas l'utilité de résultats de meilleure qualité, ni dans celui de l'optimisation de fonctions parce que les problèmes à résoudre ne s'y prêtaient pas (pas de répartition spatiale des mesures).

Le problème résolu par l'invention est celui d'adapter un algorithme d'optimisation au maillage adaptatif. Les difficultés rencontrées sont par exemple : des modifications de paramètres tels que la prise en compte de la surface des mailles, la distance inter-noeuds dans le cas de la vélocimétrie et dans le cas général la mise à jour des sites du champ.

Brève description des dessins

- La figure 1 illustre le synoptique du procédé de l'invention ;
- la figure 2 illustre l'architecture d'une carte topologique du Kohonen ;
- la figure 3 illustre des représentations des forces tangentielles et normales ;
- la figure 4 illustre des représentations des projections du vecteur vitesse $Vs$ : $e \setminus\setminus$ et $e\perp$.

Exposé détaillé de l'invention

Dans la suite de la description nous considérerons à titre d'exemple le domaine de la trajectographie d'objets.

Le procédé de l'invention constitue alors la suite d'un procédé d'obtention de trajectoires d'objets en mouvement, optimisant au moins un critère issu de la physique du phénomène observé, qui peut comprendre les étapes suivantes :

- une étape d'enregistrement de signaux composés de fragments caractéristiques de positions des objets à différents instants, de parties qui présentent la même nature que les fragments mais qui sont du bruit et de parties attribuables au bruit sans confusion possible ;
- une étape d'extraction de parties de signaux ayant la même nature que les fragments et détermination de caractéristiques leur étant associées, à partir des connaissances a priori sur leur nature et sur les trajectoires recherchées ;
- une étape de répartition de l'ensemble des parties de signaux précédemment extraits en classes, chaque classe représentant une trajectoire potentielle et comprenant un nombre prédéterminé de fragments ;
- une étape de sélection d'un sous-ensemble de classes qui satisfait des contraintes liées au type de réseau observé, comportant :

  • la génération d'un ensemble de n-uplets constitués d'un sous-ensemble de n classes,
  • la mesure de la compatibilité des classes assemblées an n-uplets par une première fonction analytique, déterminée à partir des contraintes liées au type de phénomène observé et au dispositif d'acquisition,
  • la mesure de la qualité des n-uplets par une seconde fonction analytique, déterminée à partir des contraintes liées au phénomène observé et au dispositif d'acquisition ;

- une étape de sélection parmi les classes représentant les trajectoires potentielles de celles satisfaisant les contraintes, par un procédé d'optimisation sous contraintes du (ou des) critère(s) précédent(s), en utilisant les mesures précédentes de compatibilité et de qualité, de façon à obtenir les trajectoires "réelles" des objets.

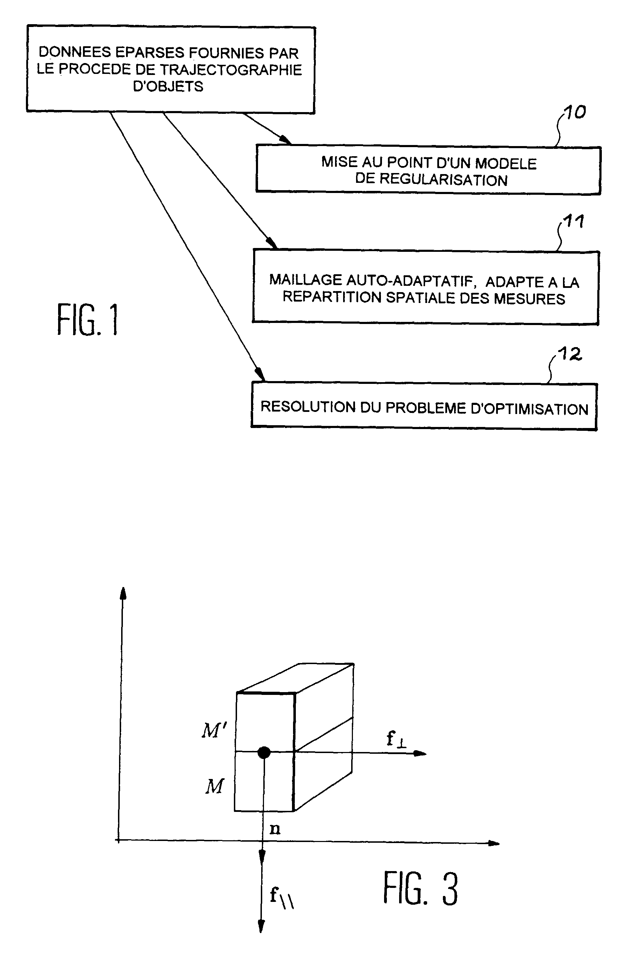

L'entrée du procédé de l'invention est constituée par la sortie de ce procédé d'obtention de trajectoires d'objets en mouvement. Le procédé de l'invention comprend trois étapes, illustrées sur la figure 1 :

- dans une première étape 10, un modèle de régularisation est élaboré. Celui-ci prend en compte des caractéristiques et propriétés sur le phénomène étudié. Une fonction analytique $E(f)$ est définie. La solution $f$ du problème est obtenue lorsque cette fonction analytique $E(f)$ est optimisée ;
- une seconde étape 11 consiste à réaliser un maillage du domaine étudié, maillage qui est adapté à la répartition spatiale des mesures ;
- une troisième étape 12 procède à l'optimisation de la fonction analytique $E(f)$ définie en étape 10 sur la grille définie par le maillage réalisé en étape 11.

L'invention consiste à combiner les différentes méthodes ou parties de méthodes existantes dans l'art connu et les adapter pour les appliquer à un problème particulier, à savoir la reconstruction d'un champ dense de primitives à partir de mesures éparses.

L'intérêt du procédé de l'invention par rapport à l'art antérieur est de proposer une méthode globale qui, pour plus complexe qu'elle soit, fournit des résultats plus précis, plus robustes au bruit sur les mesures et possédant une réelle signification physique au sens du phénomène.

On va à présent étudier chacune des étapes du procédé de l'invention.

**Etape d'élaboration du modèle de régularisation**

Le problème d'approximation de données, comme la grande majorité des problèmes rencontrés en traitement d'images, correspond à un problème inverse : à partir des observations du comportement d'un système et à partir d'informations a priori, on cherche à remonter à une information non directement observable et caractérisant ce système (le champ dense de vitesses instantanées). On parle de problème inverse, puisqu'il s'agit d'inverser les équations décrivant le comportement du système. Or, si l'établissement des équations directes ne soulève pas d'autres difficultés que celles de la modélisation de processus physiques plus ou moins complexes, il n'en est pas de même pour l'inversion de ces mêmes équations. C'est ainsi que beaucoup de ces problèmes inverses appartiennent à la catégorie des problèmes "mal posés". C'est à Hadamard que l'on doit la notion de "problèmes correctement posés", introduite dans le but de savoir quels types de conditions aux limites sont les plus naturels pour différents types d'équations différentielles. Ainsi est dit problème mal posé, un problème qui ne vérifie pas une des trois conditions données par Hadamard pour qu'un problème soit dit bien posé, à savoir qu'une solution existe pour toute observation, que cette solution soit unique et enfin qu'elle dépende continûment des données.

Le problème de reconstruction d'un champ dense de primitives est un problème mal posé au sens de Hadamard. En effet, ce problème est caractérisé par l'incomplétude des observations. Les données incomplètes réparties non-uniformément sur la surface à analyser restreignent le champ de vitesse localement, mais ne le déterminent pas de façon unique en tout point de la surface. Il existe donc une infinité de champs de vitesses possibles. La théorie de la régularisation vise précisément à transformer le problème mal posé en un problème bien posé en restreignant la classe des solutions admissibles par l'introduction de connaissances a priori sur celles-ci. En effet, en l'absence de considérations complémentaires, la seule modélisation du lien entre les observations du comportement du système et les caractéristiques de la solution à trouver ne permet pas de reconstruire une approximation tant soit peu satisfaisante de la solution. Pour essayer de contourner cette difficulté, il est nécessaire d'émettre des hypothèses sur les propriétés de la solution et de les intégrer dans le processus de reconstruction. Cette introduction de contraintes supplémentaires liées à une connaissance a priori est qualifiée de régularisation.

La résolution du problème de reconstruction d'un champ dense de primitives passe donc par la régularisation, i. e. par la recherche d'une solution approchée, unique et stabilisée par l'introduction explicite d'une information a priori. Des renseignements sur la théorie de la régularisation peuvent être trouvés dans les références [8] et [9].

L'information a priori peut être de nature déterministe ou stochastique, ce qui permet de distinguer deux types d'approches :

- techniques de régularisation déterministes : voir références [11] et [12] ;
- techniques de régularisation stochastiques: voir références [13] et [14].

L'une ou l'autre de ces techniques revient à définir une fonction analytique à optimiser et à formaliser le problème comme un problème d'optimisation à résoudre. La fonction analytique à optimiser est toujours constituée de deux termes. Le premier, appelé énergie d'attache aux données, mesure l'adéquation entre les mesures et le champ de primitives reconstruit. Le second, appelé énergie contextuelle, décrit toutes les connaissances a priori sur le champ de primitives à reconstruire.

La fonction analytique $E(f)$ à définir peut contenir des connaissances liées au processus de formation des images, au bruit envisagé sur les mesures et surtout sur la nature du phénomène étudié. Les connaissances a priori sur la nature du phénomène étudié pourront être par exemple :

- des contraintes de régularité: en tout point du domaine étudié, les variations de valeurs de primitives doivent être faibles ;
- des contraintes liées à l'équation de contrainte de mouvement en mécanique des fluides. Si la primitive à reconstruire est le vecteur vitesse, on peut imposer que $div V$ soit nul en tout point du domaine étudié, où $div V$ représente la divergence de la vitesse V ;
- des contraintes liées aux forces de pression et de frottement dans le cas où la primitive à reconstruire est le vecteur vitesse dans un écoulement de mécanique de fluides.

Dans le cadre de l'application particulière de l'invention au domaine de la vélocimétrie par imagerie de particules en mécanique des fluides, la fonction d'énergie choisie est :

$$E(f) = \sum\nolimits_{s \in (S \cap D)} \left\| f_s^d - f_s \right\|^2$$
$$+ \sum\nolimits_{\{s,t\} \in C} \mu . \rho(d_{st}) . \left( \lambda\!\perp . \left( t_{st} . (f_s - f_t) \right)^2 + \lambda\backslash\backslash . \left( n_{st} . (f_s - f_t) \right)^2 \right) \tag{3}$$
$$+ \sum\nolimits_{\{s,t\} \in C} \lambda\nabla . \rho(d_{st}) . (\nabla . f)^2$$

où :

- $f_s^d$ et $f_t^d$ désignent respectivement les mesures de vitesse aux sites $s$ et $t$ du champ,
- $f_s$ et $f_t$ désignent respectivement les primitives (valeurs de vitesse) à reconstruire aux sites $s$ et $t$ du champ,
- $\mu$ est la viscosité dynamique du fluide considéré,
- $\lambda\!\perp$, $\lambda\backslash\backslash$, $\lambda\nabla$ et $\rho(d_{st})$ sont des paramètres,
- $D$ est l'ensemble des mesures,
- $S$ est l'ensemble des sites du champ,
- $n_{st}$ est le vecteur unitaire dirigé de $s$ vers $t$, $t_{st}$ est un vecteur unitaire normal à $n_{st}$ et $d_{st}$ est la distance séparant les sites $s$ et $t$,
- $\nabla . f$ est la divergence de la fonction $f$ .

En annexe, on trouve une explication justifiant le choix de cette expression pour $E(f)$.
Une fois cette fonction analytique $E(f)$ définie, la solution $f$ du problème est obtenue lorsque $E(f)$ est optimisée, i.e. :

$$\hat{f} = \text{argument optimum de } {}_{f \in F} E(f)$$

où $F$ est l'ensemble des solutions possibles.

**Etape de maillage adaptatif**

Les approches de régularisation conventionnelles commencent par l'élaboration d'un modèle d'énergie en réalisant souvent une formulation variationnelle du problème. Puis celle-ci est suivie par une discrétisation de la fonctionnelle d'énergie et des contraintes aux limites sur une grille de calcul régulière couvrant le domaine étudié.

Dans le cadre de la reconstruction à partir de mesures éparses à laquelle a trait le présent procédé, il apparaît opportun de prendre en compte la répartition statistique spatiale des données sur le domaine étudié à l'aide d'un maillage adaptatif.

Dans les zones du domaine étudié où l'on n'a pas ou peu de données, une grande précision n'est pas nécessaire, dans la mesure où seul le terme d'énergie contextuelle sera pris en compte. A l'inverse, il est important d'avoir beaucoup de mailles aux endroits où la densité de données est forte. A la place d'un maillage régulier, il est donc nécessaire d'utiliser un maillage adapté à la densité spatiale des données.

Un autre avantage réside dans le gain en temps de calcul. En effet, utiliser des maillages à mailles uniformément réparties peut conduire à une très grande lourdeur calculatoire, parce que, afin d'avoir un nombre de mailles assez grand dans les zones aux variations importantes, il est nécessaire d'utiliser un maillage très fin sur l'ensemble de l'image et notamment aux endroits où cette finesse ne serait pas nécessaire.

Enfin, on a montré que l'emploi d'une grille non régulière qui s'ajustait aux données, de telle sorte que chaque maille de la grille tende à contenir au moins une donnée, permettait d'améliorer le conditionnement numérique du système lié à l'optimisation de $E(f)$ et donc d'améliorer la stabilité de la solution par rapport aux bruits sur les mesures.

On va à présent considérer la méthode de maillage adaptatif. Kohonen (voir référence [15]) a développé un modèle de réseau de neurones s'appuyant sur l'observation neurophysiologique d'auto-organisation des réseaux de neurones biologiques réels. Ce réseau de neurones est capable de s'auto-organiser de telle sorte qu'il approxime la fonction de densité des vecteurs d'entrée du réseau de neurones.

Ce type d'algorithme d'auto-organisation est utilisé pour des applications variées : reconnaissance de la parole (voir référence [16]), traitement du signal (voir référence [17]), problème de théorie des grappes (voir références [18], [19] et [20]), applications industrielles (voir référence [21], choix de la dimension d'une représentation réduite d'un ensemble de points de $R^n$, construction de représentations hiérarchisées. Des applications électroniques de la carte de Kohonen ont été proposées (voir références [22] et [16]).

Par rapport à l'algorithme classique, plusieurs modifications ont dû être apportées au réseau de neurones de Kohonen.

Dans l'algorithme classique de Kohonen, on suppose que l'espace des stimuli (entrées) est structuré, qu'on peut définir une notion de voisinage ou de ressemblance, par exemple au sens des voisinages définis à partir de la distance euclidienne de $R^n$. On suppose que l'on dispose de N unités (ou neurones de sortie), sur lesquelles est défini un système de voisinage et on note $V(i)$ le voisinage de l'unité $i$ (y compris l'unité $i$). On suppose plus précisément que l'espace $\Upsilon$ des stimuli est contenu dans l'espace euclidien $R^n$.

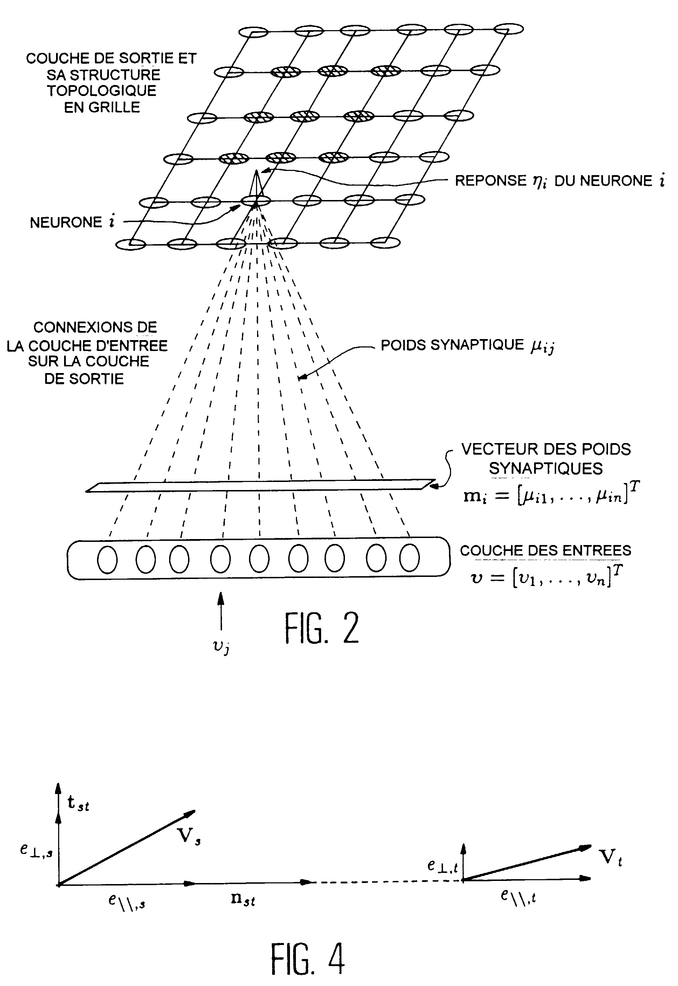

Le réseau de neurones défini par Kohonen est constitué d'une couche de neurones d'entrée (analogiques ou binaires) définissant l'espace des stimuli possibles et d'une couche de neurones de sortie mise en correspondance avec l'espace des prototypes (voir figure 2).

La réponse de l'unité $i$ de sortie à la présentation d'un stimulus $v = [v_1,....,v_n]^T$ est donnée par :

$$n_i = \sum_{j=1}^{n} \mu_{ij}.v_j$$

où les $\mu_{ij} \in R$ sont des paramètres adaptatifs. En fait, chaque ensemble ordonné $(\mu_{i1},....,\mu_{in})$ peut être regardé comme une sorte d'image pouvant être comparée ou associée à l'ensemble ordonné correspondant $(v_1,....,v_n)$. Ce qui caractérise donc l'unité $i$, c'est le vecteur des poids synaptiques $m_i = [\mu_{i1},....,\mu_{in}]^T$, représenté dans le même espace $\Upsilon$ que les stimuli. C'est sur ce vecteur que porte l'apprentissage.

L'objectif de l'invention est de définir un processus adaptatif d'apprentissage, dans lequel les paramètres de toutes les unités convergent vers des valeurs telles que chaque unité devienne spécifiquement sensible à un domaine particulier des signaux d'entrée dans un ordre régulier. A cette fin, pour un état donné des vecteurs $m_i$, est définie l'application $\Phi(m)$, qui, au stimulus $v$, associe l'unité $i_c$ telle que $m_{ic}$ soit le plus proche de $v$ dans $\Upsilon$, la relation de proximité adoptée pouvant être la distance euclidienne entre vecteurs. Il s'agit là d'un processus de compétition: élection du vecteur de poids le plus proche du stimulus présenté. Le problème est alors de définir un processus d'adaptation des vecteurs $m_i$ de sorte qu'ils convergent vers des valeurs $m_i^*$ qui rendent l'application $\Phi(m^*)$ respectueuse des relations de voisinage. Pour ce faire, l'apprentissage se déroule de telle sorte que les unités ne soient pas affectées par l'apprentissage de manière indépendante. Au cours d'une itération, on définit un voisinage $v(i_c)$ autour de l'unité $i_c$ gagnante. Seules les unités appartenant à $v(i_c)$ sont affectées par l'apprentissage.

T. Kohonen a proposé l'algorithme suivant (voir référence [15] :

**1.** Au temps t=0, les valeurs de $\overset{(0)}{i}$ sont quelconques (aléatoires et indépendantes par exemple).

**2.** Au temps t+1, on présente le stimulus $v^{(t+1)}$, choisi aléatoirement dans $\Upsilon$ selon une loi de probabilité $p(v)$. On détermine alors l'unité de meilleur réponse $i_c$ vérifiant:

$$n_{ic}^{(t+1)} = \max_i n_i^{(t+1)}$$

ce qui est équivalent à :

$$\left\| v^{(t+1)} - m_{ic}^{(t)} \right\| = \min_i \left\| v^{(t+1)} - m_i^{(t)} \right\|$$

**3.** On renforce alors l'ajustement en $i_c$ et ses voisins en posant:

$$\mu_{ij}^{(t+1)} = \mu_{ij}^{(t)} + \alpha^{(t)}.\left( v_j^{(t+1)} - \mu_{ij}^{(t)} \right), \ \text{si} \ i \in V\left(i_c\right)$$

$$= \mu_{ij}^{(t)}, \ \text{si} \ i \notin V\left(i_c\right)$$

Le résultat énoncé par Kohonen est que le vecteur $m_i$ des coefficients synaptiques converge (au cours du temps) vers des valeurs $m_i^*$ telles que l'application $\Phi(m^*)$ respecte la topologie. Et plus précisément, la fonction densité ponctuelle des vecteurs $m_i$ converge vers une fonction qui est une image discrétisée de la densité $p(v)$ avec laquelle sont présentés les stimuli $v$, et reflète donc ainsi la distribution de probabilité des entrées.

Les poids synaptiques reliant les neurones de la couche d'entrée à un neurone de la couche de sortie définissent les coordonnées dans l'espace des entrées du prototype représenté par le neurone de sortie. Après apprentissage, un stimulus d'entrée sera représenté par le neurone prototype dont il se rapproche le plus. Par conséquent, une fois l'apprentissage achevé, les valeurs de connexions définissent un pavage de Voronoi de l'espace des entrées qui doit échantillonner le mieux possible la distribution de probabilité des stimuli d'entrée. Ce sera le rôle de l'apprentissage d'établir un rapport entre la topologie de l'espace des entrées et la proximité des représentants des prototypes sur la couche de sortie. On pense ainsi faire acquérir au réseau des capacités de robustesse, de stabilité et de simplicité de la représentation.

Dans l'invention on apporte les modifications suivantes :

- Afin d'assurer une bonne qualité de régularisation sur le maillage, les mailles de celui-ci doivent être aussi régulières que possibles (en l'occurrence, les éléments quadrilatéraux doivent ressembler à des carrés autant que possible). Les éléments singuliers (rectangles trop plats, rectangles dégénérés) pourraient causer des instabilités. Des contraintes sont donc imposées sur les angles entre ressorts d'une maille : les quatre angles formés par les ressorts pris deux par deux doivent être supérieurs à un angle minimal. Si, après mise à jour d'un noeud, parmi les quatre mailles auxquelles il appartient, une maille présente un aspect plat, la mise à jour de ce neurone n'est pas effectuée : le noeud ne change pas de place.

- Il peut être nécessaire d'imposer une distance minimale inter-noeuds. En conséquence, on impose une seconde contrainte sur les distances inter-noeuds. Si, après mise à jour d'un noeud, parmi les quatre ressorts auxquels il est relié, un est de longueur inférieure à $d_{min}$, on ne réalise pas la mise à jour du neurone concerné.

**Etape de résolution**

L'étape 10 a conduit à la définition d'une fonction analytique $E(f)$ à optimiser, telle qu'à l'optimum de cette fonction corresponde la solution optimale.

L'étape 11 a fourni une grille non régulière adaptée à la densité des données.

L'étape 12 est une étape de résolution au cours de laquelle la fonction analytique $E(f)$ est optimisée sur la grille non régulière générée par l'étape 11.

Toute méthode d'optimisation existant dans l'art connu pourra être utilisée.

Le résultat fourni par cette ultime étape est une carte où les valeurs de la primitive à reconstruire sont connues en tout point du domaine étudié.

ANNEXE

**Justification du choix de l'expression $E(f)$ dans le cas de l'application de vélocimétrie en mécanique des fluides**

Soit une lattice rectangulaire $S$ de sites ponctuels correspondant à l'image numérique bidimensionnelle de l'écoulement étudié

Dans le modèle proposé, les vecterus extraits fournis par le procédé d'obtention de trajectoires d'objets sont les uniques mesures utilisées pour la reconstruction du champ de vitesse dense. La réalisation $o$ du champ de mesure $Y = \{Y_s, s \in S\}$ est constituée par :

$$\forall s \in D, o_s = V_s^d = ( u_s^d , v_s^d ) \tag{4}$$

Ainsi l'ensemble des mesures est désigné par :

$$o = \{o_s, s \in D\} = \{ V_s^d, s \in D\},$$

où $V_s^d = (u_s^d, v_s^d)$ est un vecteur bidimentionel dans lequel $u_s^d(resp. v_s^d)$ est la composante de la vitesse suivant l'axe des $x(resp. y)$ de la vitesse fournie initialement au site $s$ et $D$ est un ensemble fini de sites. Les observations prennent leur valeurs dans $\wedge_{obs}. \Omega_{obs}$ est l'ensemble fini des configurations d'observations.

On cherche à construire le champ de primitives $X=\{X_s, s \in S\}$ sur le même grille $S$ que la grille des pixels. La réalisation $e=\{e_s, s \in S\}=\{V_s, s \in S\}$ du champ de primitives, $X$ est le champ global de vecteur vitesse à reconstruire, et $V_s$ représente la primitive au site $s$, i.e. le vecteur vitesse au site $s$. Les primitives sont toutes de même nature : le même espace d'états $\Lambda$ est associé à chacun des sites de $S$. L'ensemble des configurations de primitives est $\Omega = \Lambda^S$.

Un modèle est élaboré afin de rendre compte de la physique du phénomène étudié. Ce modèle est directement corrélé aux propriétés physiques du fluide et procède de l'étude de la mécanique des milieux continus.

Dans ce modèle, l'énergie contextuelle fait intervenir trois termes d'énergie distincts, l'un représentatif des forces de frottement, l'autre exprimant les forces de pression et le dernier représentant une contrainte sur la valeur de la divergence de la vitesse :

$$U_2(e) = U_{frottement}(e) + U_{pression}(e) + U_{divergence}(e) \qquad (5)$$

On considère une particule fluide située en M(x,y) et une autre située en un point très voisin en M'(x+dx,y+dy) (figure 3).

Grâce à l'hypothèse Newtonienne des fluides incompressibles et aux lois de la mécanique des fluides, on peut formuler la force tangentielle de frottement exercée sur la particule fluide en M par la particule fluide en M'. Ainsi, en assimilant l'écoulement à un écoulement sur une surface et la particule fluide M à un élément de cette surface, tendant à être entraînée par le fluide (notamment situé en M'), la force tangentielle de frottement $f_{frottement}$ peut être exprimée comme suit :

$$f_{frottement} = \mu \frac{\partial e_\perp}{\partial n} \qquad (6)$$

où $\mu$ est la viscosité dynamique du fluide, $n$ est le vecteur unitaire normal à la surface en M et $e_\perp$ est la composante de $V$ normale à $n$.

Il convient d'introduire dans ce modèle un terme d'énergie rendant compte de ces forces de frottement.

L'idée la plus naturelle est d'utiliser la fonction potentielle de laquelle dérive la force $f_{frottement}$. A cause de la présence de dérivées partielles dans l'expression de $f_{frottement}$, le potentiel correspondant à $f_{frottement}$ est d'une grande complexité. Aussi, afin de définir une énergie d'une forme plus simple, on a choisi d'exploiter la relation physique mise en lumière par l'équation (**6**), à savoir qu'il existe une relation mutuelle d'interaction entre les composantes tangentielles de la vitesse de deux particules voisines. Le modèle de potentiel de frottement que l'on a élaboré prenant en compte cette propriété physique est décrit ci-après.

Soient $s$ et $t$ deux sites, $n_{st}$ le vecteur unitaire dirigé de $s$ vers $t$, $t_{st}$ un vecteur unitaire normal à $n_{st}$ et $d_{st}$ la distance séparant les sites $s$ et $t$. On appelle $e_{\parallel,s}$ ($resp. e_{\parallel,t}$) la projection du vecteur vitesse $V_s$ du site $s$ ($resp. t$) sur $n_{st}$ et $e_{\perp,s}$ la projection de $V_s$ sur un $t_{st}$ (voir figure 4). On définit l'énergie de frottement $U_{frottement}(e)$ par :

$$U_{frottement}(e) = \sum_{\{s,t\} \in C} V_{frottement,\{s,t\}}(e) \qquad (7)$$

dans laquelle le potentiel $V_{frottement,\{s,t\}}$ de la clique binaire $\{s,t\}$ considéré est exprimé par :

$$V_{frottement,\{s,t\}}(e) = \lambda_\perp \cdot \mu \cdot \rho(d_{st}) \cdot \left( e_{\perp,s} - e_{\perp,t} \right)^2 \qquad (8)$$

qui peut aussi s'écrire :

$$V_{frottement,\{s,t\}}(e) = \lambda_\perp \cdot \mu \cdot \rho(d_{st}) \cdot \left( t_{st} \cdot (V_s - V_t) \right)^2 \qquad (9)$$

Ce potentiel traduit le phénomène de glissement de deux éléments de surface parallèlement l'un à l'autre. La variable $\lambda_\perp$ est un paramètre pondérant la force de ce terme d'énergie, $\mu$ est la viscosité dynamique du fluide et $\rho(d_{st})$ pondère l'influence du terme d'énergie en fonction de la distance des sites $s$ et $t$.

De par l'expression de l'énergie de frottement, plus la viscosité est élevée et plus les particules sont proches, plus les composantes tangentielles des vitesses de sites voisins doivent être proches.

Plus qu'une formule analytique précise de $U_{pression}$, on souhaite définir une énergie représentative des phénomènes de pression intervenant entre particules fluides. Ainsi, on conçoit que la composante normale de la vitesse d'une particule ait une forte corrélation avec la composante normale de la vitesse d'une particule située sur sa normale. On décide d'imposer une contrainte de douceur locale forte sur les projections $e_\|$, des vitesses de deux particules fluides normales (séparées par un vecteur colinéaire $n_{st}$). On définit l'énergie de pression $U_{pression}(e)$ par :

$$U_{pression}(e) = \sum_{\{s,t\} \in C} V_{pression,\{s,t\}}(e) \qquad (10)$$

dans laquelle $V_{pression,\{s,t\}}(e)$ est défini par :

$$V_{pression,\{s,t\}}(e) = \lambda . \mu . \rho(d_{st}) . \left( e_{,s^-,t} \right)^2 \qquad (11)$$

soit :

$$V_{pression,\{s,t\}}(e) = \lambda . \mu . \rho(d_{st}) . \left( n_{st} . (V_s - V_t) \right)^2 \qquad (12)$$

Des informations complémentaires liées aux propriétés physiques du phénomène sont disponibles et peuvent être introduites.

Une équation fondamentale de la mécanique des fluides est la loi de conservation de la matière qui peut s'écrire :

$$\frac{\partial \rho}{\partial t} + \rho \nabla . V + V \nabla \rho = 0 \qquad (13)$$

dans laquelle $\rho$ est la densité du fluide et $V$ sa vitesse. Dans le cas où le fluide est incompressible, c'est-à-dire que sa densité peut être considérée constante dans tout le volume de fluide et pendant tout le temps du mouvement, l'équation de continuité précédemment énoncée prend une forme très simple :

$$\nabla . V = 0 \qquad (14)$$

qui impose que, en tout point de l'écoulement, la divergence de la vitesse est nulle.

Si l'écoulement est bidimensionnel ou bien s'il est tridimensionnel avec une très faible composante en z, il peut être intéressant d'exploiter l'équation de continuité et d'en déduire une nouvelle contrainte pour l'énergie contextuelle $U e$. Dans le cas des écoulements bidimensionnels ou semi-tridimensionnels, un terme dit de divergence $U_{divergence}(e)$ peut être ajouté à l'énergie contextuelle :

$$U_2(e) = U_{frottement}(e) + U_{pression}(e) + U_{divergence}(e) \qquad (15)$$

$$U_{divergence}(e) = \sum_{\{s,t\} \in C} V_{divergence,\{s,t\}}(e) \qquad (16)$$

$$V_{divergence,\{s,t\}}(e) = \lambda_\nabla . \rho(d_{st}) . \left( (u_s - u_t) + (v_s - v_t) \right)^2 \qquad (17)$$

où $\lambda_\nabla$ est un paramètre pondérant l'influence du terme de divergence par rapport aux autres termes.

REFERENCES

[1] C. Peterson, "Track Finding With Neural Networks" (Nuclear Instruments and Methods in Physics Research, vol. A279, pages 537-545, 1989)

[2] A. Cenedese, G. Romano; A. Paglialunga et M. Terlizzi, "Neural Net for Trajectories Recognition In a Flow" (Proceedings of The Sixth International Symposium on Applications of Laser Techniques to Fluid Mechanics, pages 27.1.1-27.1.5, 1992)

[3] M. Gyulassy et de M. Harlander, "Elastic Tracking And Neural Network Algorithms For Complex pattern Recognition" (Computer Physics Communications, vol. 66, pages 31-46, 1991)

[4] Y. Hasan, T. Blanchat, C. Seely et R. Canaan, "Simultaneous velocity Measurements of Both Components of a Two Phases Flow Using Partial Image Velocimetry" (ICONE-91, pages 121-128, Tokyo, 4-7 novembre 1991)

[5] R.L. Hardy, "Multiquadric Equations of Topography and Other Irregular Surfaces" (Journal of Geophysical Research, 76(8) : 1905-1931, 1971)

[6] J.C. Agui et J. Jimenez, "On The Performance of Particle Tracking" (journal of Fluid Mechanics, 185:447-468, 1987)

[7] K. Imaichi et K. Ohmi, "Flow Visualization III" (Chapter Quantitative Flow Analysis Aided by Image Processing of Flow Visualization Photographs, pages 301-305, Washington : Hemisphere, 1983 ed. W. Yang)

[8] M. Hino, Y. Meng et M. Murayama, "An Attemps of Estimating The Instantaneous Velocity Field of a Non-Stationnary Flow From Velocity Measurement at a Few Points" (Fluid Dynamic Research, 7:101-108, 1991)

[9] T. Poggio, V. Torre et C. Koch, "Computational Vision and Regularization Theory" (Nature, 317:1986, 1985)

[10] S. Geman et D. Geman, "Stochastic Relaxation, Gibbs Distribution, and the Bayesian Restoration of Images" (IEEE Transactions on pattern Analysis and Machine Intellitence, 6:721-741, 1984)

[11] A. Tikhonov, "Solution of Incorrectly Formulated problems and the Regularization Method" (Soviet Math. Dokl., 4:1035-1038, 1963)

[12] D. Saint-Felix, "Restauration d'images: régularisation d'un problème malposé et algorithme associée" (PhD thesis, Université de Paris Sud, Septembre 1987, 253 pages)

[13] G.Demoment, "Image reconstruction and Restoration: Overview of Common Estimation Structures and Problems" (IEEE Transactions on pattern Analysis and Machine Intelligence, 37(12):2024-2036, 1988)

[14] P. Perrez, "Champs markoviens et analyse multirésolution de l'image. Application à l'analyse du mouvement" (PhD thesis, Université de Rennes I, 1993)

[15] T. Kohonen, "Self-Organization and Associative Memory" (Springer-Verlag, 1984)

[16] T. Koizumi, J. Urata et S. Tanigushi, "A Phoneme Recognition Using Self-Organizating Feature map and Hidden Markov Models" (Int. Conference on Artificial Neural Networks ICANN-91, pages 777-782, Espoo, Finlande, juin 1991)

[17] K. Kallio et al, "Classification of Lung Sounds by Using Self-Organizing Feture Maps" (Int. Conference on Artificial Neural Networks, ICANN-91, pages 803-808, Espoo, Finlande, juin 1991)

[18] H. EL Ghaziri, "Solving Routing Problems by a Self-Organizing Map" (Int. Conference on Artificial Neural Networks, ICANN-91, pages 829-834, Espoo, Finlande, juin 1991)

[19] B. Angeniol, G. de la Croix Vaubois et J.Y. Le Tezier, "Self-Organizing Feature Maps and the travelling Salesman" (Neural networks, 1(4):289-293, 1988)

[20] M. Goldstein, "Self-Organizing Feature Maps for the Multiple Travelling Salesmen Problem" (Int. Neural Network Conference, pages 258-261, Paris, France, juillet 1990)

[21] V. Tryba et K. Goser, "Self-Organizing Feature Maps for Process Control in Chemistry" (Int. Conference on Artificial Neural Networks, ICANN-91, pages 847-852, Espoo, Finlande, juin 1991)

[22] E. Ardizzone, A. Chella et F. Sorbello, "A Digital Architecture Implementing the Self-Organizing Feature Maps" (Int. Conference on Artificial Neural Networks, ICANN-91, pages 721-727, Espoo, Finlande, juin 1991)

**Revendications**

1. Procédé de reconstruction d'un champ dense de caractéristiques associées à un phénomène physique à partir de mesures éparses, caractérisé en ce qu'il comporte les étapes suivantes :

   - une première étape (10) d'élaboration d'un modèle de reconstruction du champ élaboré à partir des connaissances a priori sur le phénomène étudié de façon à obtenir une fonction analytique ;
   - une seconde étape (11) de réalisation d'un maillage du champ;
   - une troisième étape (12) de reconstruction du champ par optimisation de la fonction analytique ;

   et en ce que le modèle de reconstruction prend en compte les caractéristiques physiques du phénomène.

2. Procédé selon la revendication 1, caractérisé en ce que le maillage est adapté à la répartition spatiale des mesures.

3. Procédé selon la revendication 1, caractérisé en ce que dans la seconde étape on utilise un algorithme de type Kohonen dans lequel afin d'assurer une bonne qualité de régularisation sur le maillage, les mailles de celui-ci sont aussi régulières que possibles ; et en ce que des contraintes sont imposées sur les angles entre ressorts d'une maille : les quatre angles formés par les ressorts pris deux par deux devant être supérieurs à un angle minimal.

4. Procédé selon la revendication 3, caractérisé en ce qu'on impose une distance minimale inter-noeuds.

5. Procédé selon la revendication 1, caractérisé en ce que les caractéristiques sont des caractéristiques de trajectoire d'objet telles que la vitesse ou l'accélératiion.

6. Procédé selon la revendication 1, caractérisé en ce que les mesures éparses sont fournies par un procédé de trajectographie d'objets.

7. Procédé selon la revendication 6, caractérisé en ce que le procédé de trajectographie d'objet comprend les étapes suivantes :

   - une étape d'enregistrement de signaux composés de fragments caractéristiques des positions des objets à différents instants, de parties qui présentent la même nature que les fragments mais qui sont du bruit et de parties attribuables au bruit sans confusion possible ;
   - une étape d'extraction de parties de signaux ayant la même nature que les fragments et détermination de caractéristiques leur étant associées, à partir des connaissances a priori sur leur nature et sur les trajectoires recherchées ;
   - une étape de répartition de l'ensemble des parties de signaux précédemment extraits en classes, chaque classe représentant une trajectoire potentielle et comprenant un nombre prédéterminé de fragments ;
   - une étape de sélection d'un sous-ensemble de classes qui satisfait des contraintes liées au type de réseau observé, comportant :

     • la génération d'un ensemble de n-uplets constitués d'un sous-ensemble de n classes,
     • la mesure de la compatibilité des classes assemblées en n-uplets par une première fonction analytique, déterminée à partir des contraintes liées au type de phénomène observé et au dispositif d'acquisition,
     • la mesure de la qualité des n-uplets par une seconde fonction analytique, déterminée à partir des contraintes liées au phénomène observé et au dispositif d'acquisition ;

   - une étape de sélection parmi les classes représentant les trajectoires potentielles de celles satisfaisant les contraintes, par un procédé d'optimisation sous contrainte du (ou des) critère(s) précédent(s), en utilisant les mesures précédentes de compatibilité et de qualité, de façon à obtenir les trajectoires "réelles" des objets.

8. Procédé selon l'une quelconque des revendications précédentes, caractérisé en ce qu'il est utilisé dans le domaine de la vélocimétrie par imagerie de particules en mécanique des fluides.

9. Procédé selon la revendication 8, caractérisé en ce que la fonction analytique est telle que :

$$E(f) = \sum_{s \in (S \cap D)} \left\| f_s^d - f_s \right\|^2$$
$$+ \sum_{\{s,t\} \in C} \mu . \rho(d_{st}) . \left( \lambda \bot . (t_{st}.(f_s - f_t))^2 + \lambda_{\backslash\backslash} . (n_{st}.(f_s - f_t))^2 \right) \quad (3)$$
$$+ \sum_{\{s,t\} \in C} \lambda \nabla . \rho(d_{st}) . (\nabla . f)^2$$

où :

- $f_s^d$ et $f_t^d$ désignent respectivement les mesures de vitesse aux sites $s$ et $t$ du champ,
- $f_s$ et $f_t$ désignent respectivement les primitives (valeurs de vitesse) à reconstruire aux sites $s$ et $t$ du champ,
- $\mu$ est la viscosité dynamique du fluide considéré,
- $\lambda\bot$, $\lambda\backslash\backslash$, $\lambda\nabla$ et $\rho(d_{st})$ sont des paramètres,
- $D$ est l'ensemble des mesures,
- $S$ est l'ensemble des sites du champ,
- $n_{st}$ est le vecteur unitaire dirigé de $s$ vers $t$, $t_{st}$ est un vecteur unitaire normal à $n_{st}$ et $d_{st}$ est la distance séparant les sites $s$ et $t$,
- $\nabla . f$ est la divergence de la fonction $f$.

10. Procédé selon la revendication 9, caractérisé en ce qu'une fois la fonction analytique $E(f)$ définie, la solution $f$ du problème est obtenue lorsque $E(f)$ est optimisée, i.e.:

$$\hat{f} = \text{argument optimum de } _{f \in F} E(f)$$

où $F$ est l'ensemble des solutions possibles.

DONNEES EPARSES FOURNIES PAR
LE PROCEDE DE TRAJECTOGRAPHIE
D'OBJETS

10

MISE AU POINT D'UN MODELE
DE REGULARISATION

11

MAILLAGE AUTO-ADAPTATIF, ADAPTE A LA
REPARTITION SPATIALE DES MESURES

12

RESOLUTION DU PROBLEME D'OPTIMISATION

FIG. 1

$M'$

$f_\perp$

$M$

$\mathbf{n}$

$f_{\backslash\backslash}$

FIG. 3

COUCHE DE SORTIE ET
SA STRUCTURE
TOPOLOGIQUE
EN GRILLE

REPONSE $\eta_i$ DU NEURONE $i$

NEURONE $i$

CONNEXIONS DE
LA COUCHE D'ENTREE
SUR LA COUCHE
DE SORTIE

POIDS SYNAPTIQUE $\mu_{ij}$

VECTEUR DES POIDS
SYNAPTIQUES
$$\mathbf{m}_i = [\mu_{i1}, \ldots, \mu_{in}]^T$$

COUCHE DES ENTREES
$$v = [v_1, \ldots, v_n]^T$$

$v_j$

FIG. 2

$\mathbf{t}_{st}$

$\mathbf{V}_s$

$e_{\perp,s}$

$e_{\backslash\backslash,s}$

$\mathbf{n}_{st}$

$e_{\perp,t}$

$\mathbf{V}_t$

$e_{\backslash\backslash,t}$

FIG. 4

**EP 0 749 014 A1**

Office européen
des brevets

**RAPPORT DE RECHERCHE EUROPEENNE**

Numero de la demande
EP 96 40 1286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | FLUID DYNAMICS RESEARCH, vol. 7, 1991, pages 101-108, XP000564351 HINO ET AL: "an attempt at estimating the instantaneous velocity field of a nonstationary flow from velocity measurement at a few points" * le document en entier * --- | 1,2,5,6,8 | G01P5/00 |
| A | EXPERIMENTS IN FLUIDS, vol. 15, no. 6, 1993, BERLIN DE, pages 417-430, XP000413762 SPEDDING ET AL: "performance analysis and application of grid interpolation techniques for fluid flows" ----- | | |

DOMAINES TECHNIQUES RECHERCHES (Int.Cl.6)

G01P
G06F

Le présent rapport a été établi pour toutes les revendications

| Lieu de la recherche | Date d'achèvement de la recherche | Examinateur |
|---|---|---|
| LA HAYE | 5 Septembre 1996 | Guingale, A |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)